# EUROPEAN PATENT APPLICATION

(11) **EP 3 731 161 A1**
(43) Date of publication of application: **28.10.2020**
(21) Application number: 19797974.3
(22) Date of filing: 04.04.2019
(51) Int. Cl.: G06Q 10/06

(54) **MODEL APPLICATION METHOD AND SYSTEM, AND MODEL MANAGEMENT METHOD AND SERVER**

(30) Priority: 08.03.2019 CN 201910176811
(71) Applicant: Wangsu Science & Technology Co., Ltd., Shanghai 200030 (CN)
(72) Inventor: YANG, Shengchun, Shanghai 200030 (CN); LI, Jinfeng, Shanghai 200030 (CN)
(74) Representative: Vinsome, Rex Martin
(86) International application number: PCT/CN2019/081536
(87) International publication number: WO 2020/181599

(57) **Abstract**

The present application discloses a model application method, a management method, a system and a server. The model application method comprises: receiving request information sent by a user terminal (S21); determining a target business scenario corresponding to the request information (S22); determining, according to a preset configuration rule, a target scheduling rule corresponding to the target business scenario; herein the target scheduling rule comprises: a name of a target model and a target sequence (S23); scheduling the target model from a stored model according to the target sequence in the target scheduling rule to perform information processing and obtain a request result corresponding to the request information (S24); and feeding the request result back to the user terminal (S25). The technical solutions provided in the present application may save computer resources and model maintenance cost.

## Description

### CROSS REFERENCE TO RELATED APPLICATIONS

The present disclosure is based on the Chinese patent application No. 201910176811.X, submitted on March 8, 2019 and titled "MODEL APPLICATION METHOD, MANAGEMENT METHOD, SYSTEM AND SERVER", which is incorporated in its entirety into this application by reference.

### TECHNICAL FIELD

The present disclosure relates to the artificial intelligence technology, especially to a model application method, a management method, a system and a server.

### BACKGROUND

Artificial intelligence (AI) is a technology for researches and developments of simulating, extending and expanding human intelligence. With the rapid development of computer science, the artificial intelligence technology has also been increasingly applied to people's lives. Technologies such as robotics, language recognition, image recognition, natural language processing, and expert systems have been widely applied to applications such as intelligent speech, face recognition, and intelligent assistants.

When user request information is processed through the AI technology, a model established based on simulation algorithm may be used to perform simulation on content of a user request to obtain a result corresponding to the request content. At present, when a model is applied, one or more models often need to be applied in a business scenario. The model(s) that need(s) to be applied in a business scenario may be encapsulated in order. When the user request information is received in the business scenario, the model(s) encapsulated by using the business scenario may be applied to processing to obtain a processing result.

Since there are different models that usually need to be applied in different service scenarios, one model needs to be encapsulated separately in regard to different business scenarios when the model is applied to different business scenarios. Consequently, model application is both inflexible and a waste of computer resources. Since one model is encapsulated multiple times, when the model needs to be modified, a plurality of encapsulated models have to be modified separately, resulting in high maintenance cost of the model. Therefore, there is a need for a more flexible model application method.

### SUMMARY

The objective of the present disclosure is to provide a model application method, a management method, a system and a server, which may save computer resources and model maintenance cost.

In order to realize the above objective, the present disclosure, in one respect, provides a model application method, comprising: receiving request information sent by a user terminal; determining a target business scenario corresponding to the request information; determining, according to a preset configuration rule, a target scheduling rule corresponding to the target business scenario; herein the target scheduling rule comprises: a name of a target model and a target sequence; scheduling the target model from a stored model according to the target sequence in the target scheduling rule to perform information processing and obtain a request result corresponding to the request information; and feeding the request result back to the user terminal.

In order to realize the above objective, the present disclosure, in another respect, provides a model management method, comprising: providing a configuration server configured to store a configuration rule and a model, wherein the configuration rule comprises: a preset correspondence between a business scenario and a scheduling rule; wherein the scheduling rule comprises: a scheduled model's name and a scheduling sequence; and obtaining a target business scenario, and determining a target scheduling rule corresponding to the target business scenario according to the target business scenario and the stored configuration rule, and feeding back the target scheduling rule.

In order to realize the above objective, the present disclosure, in another respect, provides a model application system, comprising:
a user terminal configured to send request information to a model application server, and receive a request result corresponding to the request information; wherein the request information comprises: business interface information and request content; and
the model application server configured to receive request information sent by the user terminal; determine a target business scenario according to the request information, determine a target scheduling rule corresponding to the target business scenario according to a preset configuration rule, schedule a target model according to a target sequence in the target scheduling rule to perform information processing and obtain a request result corresponding to the request information, and feed the request result back to the user terminal; and the model application server being further configured to store the model.

In order to realize the above objective, the present disclosure, in another respect, provides a model management server, comprising: a storage unit, an information receiving unit, and a scheduling rule determining unit; wherein,
the storage unit is configured to store a configuration rule and a model;
the information receiving unit is configured to receive information; wherein the received information comprises: target business scenario information; and
the scheduling rule determining unit is configured to determine, according to the target business scenario received by the information receiving unit, a target scheduling rule corresponding to the target business scenario from the configuration rule stored in the storage unit.

In order to realize the above objective, the present disclosure, in still another respect, provides that a server comprising a memory and a processor, wherein the memory is configured to store a computer program which, when executed by the processor, implements the implemented method described above.

Therefore, in the technical solution provided in the present disclosure, each algorithm model used to implement business scenario simulation needs to be stored only once, and corresponding model scheduling rules may be pre-configured for different business scenarios by using a configuration rule. When different business scenarios are to be simulated, scheduling rules corresponding to the business scenarios may be searched for and then the models may be called in sequence according to the scheduling rules without encapsulating one model for a plurality of times in different business scenarios. When the model needs to be modified, the stored model may be modified only once without modifying models encapsulated in a plurality of business scenarios. Therefore, the technical solutions provided in the present disclosure save not only computer resources, but also cost for maintaining models. Besides, in the technical solutions of the present disclosure, when a new business scenario or a scheduling rule corresponding to an existing business scenario changes, the configuration rule may be updated only, and the operation is fast, thereby improving the execution efficiency of a developer.

### BRIEF DESCRIPTION OF THE DRAWINGS

In order to describe the technical solutions of the embodiments of the present application more clearly, drawings used in description of the embodiments will be briefly described below. It is evident that the drawings in the following description are only some embodiments of the present disclosure. For those skilled in the art, other drawings may also be obtained from those drawings without an inventive effort.
FIG. 1 is a flow chart of a model management method in an embodiment of the present disclosure;
FIG. 2 is a flow chart of a model application method in an embodiment of the present disclosure;
FIG. 3 is a composition schematic diagram of a model application system in an embodiment of the present disclosure;
FIG. 4 is a schematic diagram of unit composition of a model application server in an embodiment of the present disclosure;
FIG. 5 is a schematic diagram of unit composition of a model management server in an embodiment of the present disclosure;
FIG. 6 is a structural schematic diagram of a server in an embodiment of the present disclosure;
FIG. 7 is a structural schematic diagram of a computer terminal in an embodiment of the present disclosure.

### DETAILED DESCRIPTION

In order to make the objective, technical solutions and advantages of the present disclosure clearer, embodiments of the present disclosure will be further described in detail below with reference to the accompanying drawings.

The present disclosure provides a model management method which may be applied to management of a model in the AI technology.

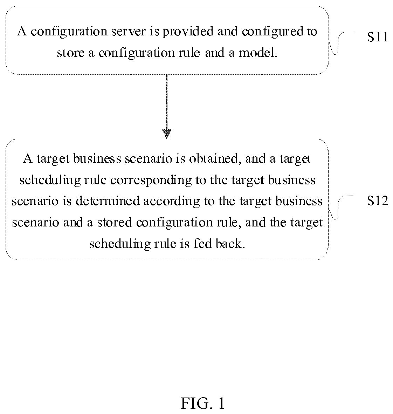

With reference to FIG. 1, the model management method provided by an embodiment of the present disclosure may include the following steps.

S11: A configuration server is provided and configured to store a configuration rule and a model.

In one embodiment, a configuration server may be provided. The configuration server may be either a server or a server cluster composed by a plurality of servers.

In one embodiment, the configuration server may store a configuration rule and a model.

The model may be configured to perform information processing to realize AI information processing. In one embodiment, the model may be an algorithm model applied to AI information processing, for example, an artificial neural network model, a genetic algorithm model and the like.

The configuration rule may be pre-stored.

In one embodiment, the configuration rule may include: a preset correspondence between business scenario information and a scheduling rule.

The business scenario information may be a scenario name corresponding to a service. For example, the business scenario information may be an intelligent question and answer (Q&A) and the like.

The scheduling rule may be used to represent models to be called in sequence for simulating a scenario. In one embodiment, the scheduling rule may include: a scheduled model's name and a scheduling sequence. For example, in the scenario of intelligent Q&A, the models scheduled in sequence may include a model for analyzing a question and a model for searching for an answer. The model for analyzing a question may analyze content of a question indicated by a user and extract a keyword of the question, while the model for searching for an answer may search for an answer according to the keyword.

The model may realize data interaction through a model interaction interface.

In one embodiment, model interaction interface of each model stored in the configuration server may be inconsistent. That is, data formats adopted by the respective model interaction interfaces may be inconsistent. Then, before calling one model to perform information processing, a data format of input information may be first converted into a data format applicable to the model, then the model may be called to perform information processing, and an information processing result of the model data format may be output.

For example, in a scheduling rule corresponding to an application scenario, a model A and a model B need to be called in succession. It is supposed that after the model A is called to perform information processing, data format of an output "output information 1" is of a 16-bit data format, and data format applicable to the model B is of a 32-bit data format. Accordingly, the data format of the "output information 1" is first converted into the 32-bit data format, then the model B is called for processing, and the "output information 2" which is of the 32-bit data format is output.

In another embodiment, a model stored in the configuration server may adopt a unified preset model interaction interface. The preset model interaction interface may adopt a preset standard data format. Accordingly, a result of one model processing may be directly called by another model without converting the data format according to a data format of a previous module and a data format of a current module before the call. In this way, direct interconnection between the models is ensured, thereby improving efficiency of information processing.

For example, in a scheduling rule corresponding to an application scenario, a model A and a model B need to be called in succession, and both the model A and the model B adopt a preset model interaction interface. Accordingly, output information obtained after processing by calling the model A is also of a standard data format, and the model B may be directly called to process the output information.

In one embodiment, the respective models may perform information processing by using the preset standard data format. For example, a model A uses the preset standard data format for information processing, and when the model A is called to perform information processing, the input information of the preset standard data format may be directly processed to obtain the output information of the preset standard data format. In this embodiment, all the models use the preset standard data format for information processing, which may improve efficiency of data processing.

In another embodiment, the respective models may use different standard data formats for information processing. Accordingly, when the models are called for data processing by using the preset model interaction interfaces, the models may convert inputs of the standard data formats into data formats applicable to the models for processing to obtain the output information of the data formats applicable to the models. Then the output information of the data formats applicable to the models is converted into output information of the standard data formats. For example, in a scheduling rule corresponding to an application scenario, a model A and a model B need to be called in succession, and both the model A and the model B use the preset model interaction interface. The model A uses a first data format for information processing, and the model B uses a second data format for information processing. Accordingly, when the model A is called to perform information processing, input information of the standard data format is converted into input information of the first data format for processing to obtain output information A of the first data format, and then the output information of the first data format is converted into the output information A of the standard data format. When the model B is called for processing the output information A of the standard data format, the output information A of the standard data format is converted into the output information A of the second data format for processing to obtain output information B of the second data format, and then the output information B of the second data format is converted into the output information B of the standard data format which is output. In this embodiment, the respective models may take full advantage of the existing models that use different data formats for information processing, thereby improving resource utilization ratio. Each of the models may only need to perform data conversion between the data format applicable to the model and the standard data format, and does not need to convert the different data formats, thereby reducing complexity of the data conversion.

S12: A target business scenario is obtained, and a target scheduling rule corresponding to the target business scenario is determined according to the target business scenario and a stored configuration rule, and the target scheduling rule is fed back.

The configuration server may obtain the target business scenario which may be determined according to request information sent by a user terminal.

In one embodiment, request information may include: business interface information and request content. Herein, the business interface information may be used to represent a service item corresponding to the request content. The business interface information may be represented by a character. For example, the business interface information may be a text "Q&A", or a number "01" or the like. The request content may be a question, an instruction, or the like sent by a user.

A target business scenario may be determined according to a business interface information in a request information. There may be a one-to-one correspondence between the business interface information and the business scenario. The correspondence between the business interface information and the business scenario may be preset.

For example, business interface information in a request information may be "Q&A", and the request content may be "how to start". The business interface information "Q&A" may represent that the service item is the intelligent question and answer. Supposing that business interface information, "Q&A", corresponds to a business scenario, "intelligent Q&A", in a correspondence between preset business interface information and a business scenario, it is determined that the business scenario corresponding to the request information is "intelligent Q&A".

In one embodiment, a target scheduling rule may be chosen from stored configuration rules according to a target business scenario. The target scheduling rule may be a scheduling rule corresponding to the target business scenario.

In one embodiment, a target scheduling rule may include: a target model's name and a target sequence. Simulation on a target business scenario may be realized by calling a target model according to a target sequence to perform information processing.

After a target scheduling rule is determined, the target scheduling rule may be fed back to a server for searching for a scheduling rule.

In another embodiment, a model management method may further include: receiving a request for updating a configuration rule, and processing the stored configuration rules according to a rule update operation and rule update content in the request for updating the configuration rule.

In one embodiment, a request for updating a configuration rule may include: a rule update operation and rule update content.

In one embodiment, a rule update operation may include: adding a configuration rule, modifying a configuration rule, and/or delete a configuration rule.

The operation of adding a configuration rule may be used to add a correspondence between a business scenario and a scheduling rule into the stored configuration rules. For example, a received request for updating a configuration rules may be "adding a configuration rule, business scenario 1, model A, model C, model D", according to which the correspondence between the business scenario and the scheduling rule may be added to the stored configuration rules. The business scenario in the correspondence is a "business scenario 1" and the scheduling rule is "model A, model C and model D".

The operation of deleting a configuration rule may be used to delete a correspondence between a business scenario and a scheduling rule from a stored configuration rule.

The operation of modifying a configuration rule may be used to modify a correspondence between a business scenario and a scheduling rule in the stored configuration rules, including modifying a scheduled models' name and/or a scheduling sequence.

For example, a scheduling rule corresponding to "business scenario 2" is "model A, model B". When a received request for updating a configuration rule is "modifying a configuration rule, business scenario 2, model A, model B, and model D", the scheduling rule corresponding to "business scenario 2" may be modified to "model A, model B, and model D". When a received request for updating a configuration rule is "modifying a configuration rule, business scenario 2, model B, and model A", the scheduling rule corresponding to "business scenario 2" may be modified to "model B, model A".

In one embodiment, a model management method may further include receiving a model update request and processing a stored model according to a model updating operation in the model update request. The model update request may include a model update operation and model update content. The model update operation may include adding a model, modifying a model, and/or deleting a model. After the update operation is performed on a stored model, all business scenarios that call the model may correspondingly apply a new model to simulate the business scenarios without updating the model encapsulated in the respective application scenarios respectively, thereby saving computer resources and maintenance cost of a model.

Therefore, in the model management method provided in the above-described embodiment, each algorithm model used to implement business scenario simulation needs to be stored only once, and corresponding model scheduling rules may be pre-configured for different business scenarios by using a configuration rule. In this way, when different business scenarios are to be simulated, the models may be called in sequence according to the scheduling rules without encapsulating one model for a plurality of times in different business scenarios, thereby saving computer resources. At the same time, when a new business scenario or a scheduling rule corresponding to an existing business scenario changes, the configuration rule may be updated only, and the operation is fast, thereby improving the execution efficiency of a developer. When the model needs to be modified, the stored model may be modified only once, thereby reducing cost of maintaining the model.

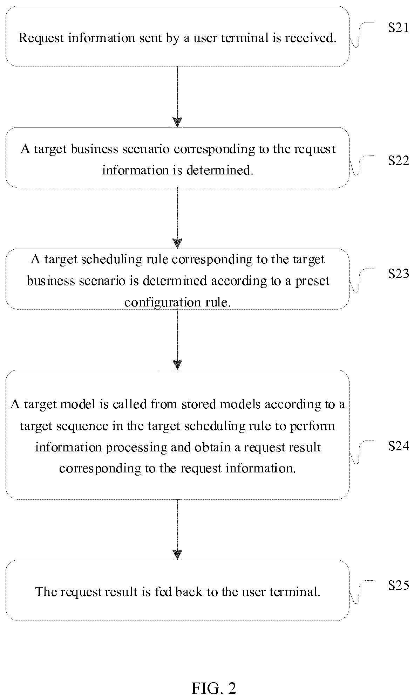

An embodiment of the present application further provides a model application method. With reference to FIG. 2, the model application method may include the following steps.

S21: Request information sent by a user terminal is received.

A server may receive request information sent by the user terminal. The request information may represent content of a service required by a user in a business scenario.

In one embodiment, the request information may include: business interface information and request content. Herein, the business interface information may be used to represent a service item corresponding to the request content. The business interface information may be represented by a character. The request content may be a question, an instruction, or the like sent by a user.

S22: A target business scenario corresponding to the request information is determined.

In one embodiment, a target business scenario may be determined according to business interface information in the request information. There may be a one-to-one correspondence between business interface information and a business scenario. A correspondence between business interface information and a business scenario may be preset.

For example, business interface information in request information may be "Q&A". Supposing that business interface information, "Q&A", corresponds to a business scenario, "intelligent Q&A", in a correspondence between preset business interface information and a business scenario, it is determined that the business scenario corresponding to the request information is "intelligent Q&A".

S23: A target scheduling rule corresponding to the target business scenario is determined according to a preset configuration rule.

A configuration rule may be pre-stored in the server.

In one embodiment, the configuration rule may include: a preset correspondence between business scenario information and a scheduling rule.

Herein, the business scenario information may be a business scenario name. The business scenario information may represent a scenario corresponding to a service item. For example, the business scenario information may be "intelligent Q&A" or the like.

The scheduling rule may be used for representing models to be called in sequence for simulating a scenario. In one embodiment, the scheduling rule may include: a scheduled model's name and a scheduling sequence.

In one embodiment, a model may be an algorithm model applied to AI information processing, for example, an artificial neural network model, a genetic algorithm model and the like. Simulated human operation in the business scenario may be realized by using a model to perform information processing, thereby realizing AI information processing. For example, an artificial neural network algorithm may be used to process and analyze voice information to obtain emotional information of the voice.

In one embodiment, the step of determining a target scheduling rule corresponding to the target business scenario according to a preset configuration rule includes: choosing the target scheduling rule from stored configuration rules according to a preset correspondence between business scenario information and a scheduling rule in the preset configuration rule. The target scheduling rule may be a scheduling rule corresponding to the target business scenario.

In one embodiment, the target scheduling rule may include: a name of a target model and a target sequence. Simulation on the target business scenario may be realized by calling the target model according to the target sequence.

S24: A target model is called from stored models according to a target sequence in the target scheduling rule to perform information processing and obtain a request result corresponding to the request information.

In one embodiment, the server may store a plurality of models which may adopt different model interaction interfaces. Alternatively, the stored plurality of models may adopt unified preset model interaction interfaces.

A target model is called from stored models according to the target sequence in the target scheduling rule to perform information processing and obtain a request result.

For example, request content in request information is "X", and a target scheduling rule corresponding to the request information is: calling model 1 and model 2 in sequence. Accordingly, "X" is used as input information and model 1 is used to perform information processing to obtain an output result "A", then "A" used as input information and model 2 is used to perform information processing to obtain an output result "B", and then "B" is output as a request result.

S25: The request result is fed back to the user terminal.

The server may feed the request result obtained by performing information processing using the target model back to the user terminal.

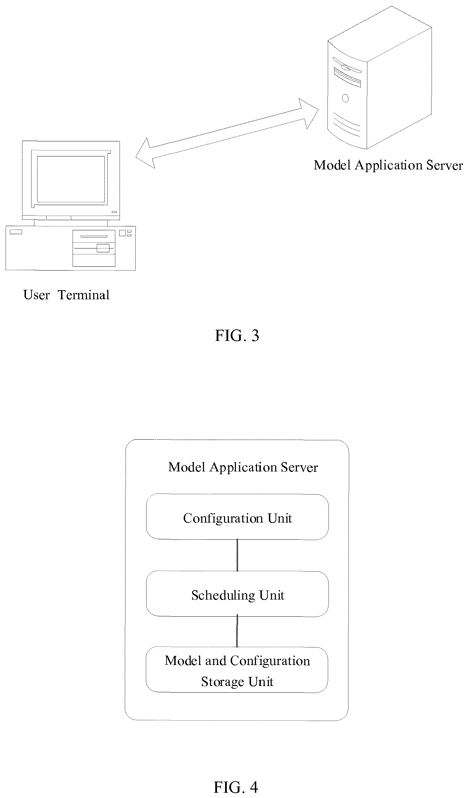

An embodiment of the present application further provides a model application system. With reference to FIG. 3, a model application system includes: a user terminal and a model application server. The model application server may be a server or a server cluster composed by a plurality of servers.

The user terminal may be configured to send request information to the model application server, and receive a request result corresponding to the request information. The request information may include: business interface information and request content.

The model application server may be configured to receive request information sent by the user terminal, determine a target business scenario according to the request information, determine a target scheduling rule corresponding to the target business scenario according to a preset configuration rule, schedule a target model according to a target sequence in the target scheduling rule to perform information processing and obtain a request result corresponding to the request information, and feed the request result back to the user terminal. The model application server may further be configured to store the model.

With reference to FIG. 4, in one embodiment, a model application server may include: a configuration unit, a scheduling unit and a model and configuration storage unit.

The model and configuration storage unit is configured to store a configuration rule and a model.

The configuration unit is configured to determine a target scheduling rule corresponding to the target business scenario according to the target business scenario and the configuration rule stored by the model and configuration storage unit.

The scheduling unit is configured to schedule a target model from the model and configuration storage unit according to the target sequence in the target scheduling rule determined by the configuration unit to perform information processing and obtain a request result corresponding to the request information.

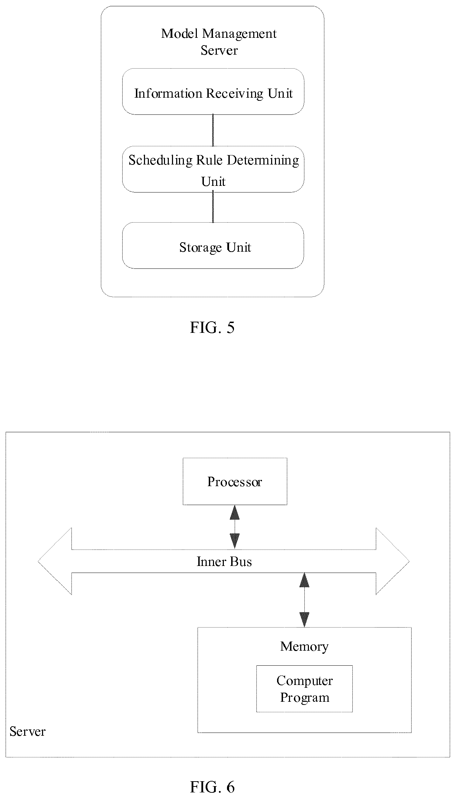

An embodiment of the present application further provides a model management server. With reference to FIG. 5, a model management server includes a storage unit, an information receiving unit, and a scheduling rule determining unit.

The storage unit is configured to store a configuration rule and a model.

The information receiving unit is configured to receive information. The received information may include: target business scenario information.

The scheduling rule determining unit is configured to determine a target scheduling rule corresponding to the target business scenario from a configuration rule stored in the storage unit according to the target business scenario received by the information receiving unit.

In one embodiment, the information receiving unit may further be configured to receive a request for updating a configuration rule. The request for updating a configuration rule may include: a rule update operation and rule update content. In this embodiment, the storage unit may further be configured to process the stored configuration rule according to the rule update operation and the rule update content in the request for updating a configuration rule. Herein the rule update operation includes: adding a configuration rule, modifying a configuration rule, and/or deleting a configuration rule.

In one embodiment, the information receiving unit may further be configured to receive a model update request. The model update request may include a model update operation and model update content. The model update operation may include adding a model, modifying a model, and/or deleting a model. In this embodiment, the storage unit may further be configured to perform information processing on the stored model according to a model update operation in the model update request.

With reference to FIG. 6, the present disclosure further provides a server including a memory and a processor. The memory is configured to store a computer program which, when executed by the processor, may implement the method of the above-described embodiments.

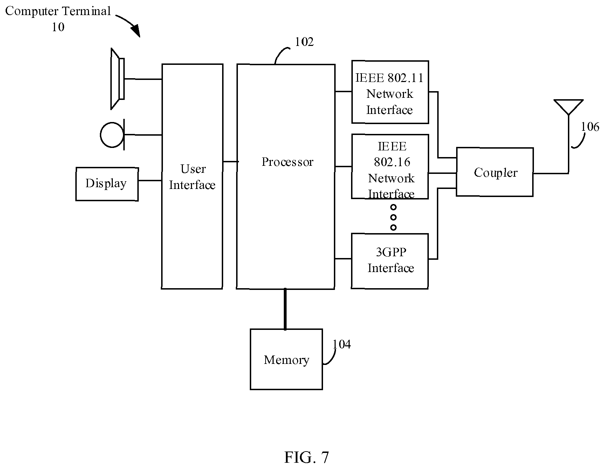

With reference to FIG. 7, in the present disclosure, the technical solution in the above embodiment may be applied to a computer terminal 10 as shown in FIG. 7. The computer terminal 10 may include one or more (only one is shown in the figure) processors 102 (the processors 102 may be , but is not limited to, a processing device like a microprocessor MCU or a programmable logic device FPGA), a memory 104 for storing data and a transmission module 106 for communication functions. Those skilled in the art may understand that the structure shown in FIG. 7 is merely illustrative but does not impose a limitation to the structure of an electronic device described above. For example, the computer terminal 10 may further include more or fewer components than those shown in FIG. 7, or have a different configuration than that shown in FIG. 7.

The memory 104 may be configured to store software programs and modules of application software, and the processor 102 implements various functional application and data processing by running software programs and modules stored in the memory 104. The memory 104 may include a high-speed random access memory, and may also include a non-volatile memory such as one or more magnetic memory devices, a flash memory, or other non-volatile solid-state memory. In some examples, the memory 104 may further include a memory remotely set relative to the processor 102. The memory remotely set may be connected to the computer terminal 10 by a network. Examples of such a network include, but are not limited to, the Internet, an intranet, a local area network, a mobile communication network, and combinations thereof.

Specifically, in the present disclosure, the above-described model application method or model management method may be as a computer program and stored in the above-described memory 104 which may be coupled with the processor 102. Accordingly, when the processor 102 executes the computer program in the memory 104, the respective steps in the above-described method may be implemented.

The transmission module 106 is configured to receive or transmit data via a network. Examples of the above-described network may include a wireless network provided by a communication provider of the computer terminal 10. In one example, the transmission module 106 includes a Network Interface Controller (NIC) that may be connected to other network devices via a base station to communicate with the Internet. In one example, the transmission module 106 may be a radio frequency (RF) module for communicating with the Internet wirelessly.

It can be seen from the above-described that the technical solutions of the present disclosure provide a model application method and a model management method based on a configuration rule. Corresponding model scheduling rules are pre-configured for different business scenarios by using the configuration rule. When simulating a business scenario, information processing shall be performed by calling a stored model according to a corresponding model scheduling rule, and each algorithm model may only be stored once, thereby saving computer resources and reducing cost of maintaining the model.

On the basis of the description of the above embodiments, those skilled in the art may clearly understand that the embodiments may be implemented by means of software plus necessary general hardware platforms, and naturally, may otherwise be implemented by hardware. On the basis of this understanding, contents of the above-described technical solutions that substantially make contributions or make contributions to the existing technology may be embodied by software products which may be stored in a computer readable memory medium such as an ROM/RAM, a magnetic disc, an optical disc or the like that includes a plurality of instructions that make a computer (i.e., a personal computer, a server, or a network device, etc.) to execute the respective embodiments or the methods described of some parts of the embodiments.

The above-described are only preferred embodiments of the present disclosure, and are not intended to impose a limitation to the present disclosure. Any modifications, equivalent substitutions and improvements, etc., which are included in the spirit and principles of the present application, shall be included in the scope of protection of the present disclosure.

## Claims

1. A model application method, comprising:
receiving request information sent by a user terminal;
determining a target business scenario corresponding to the request information;
determining, according to a preset configuration rule, a target scheduling rule corresponding to the target business scenario; wherein the target scheduling rule comprises: a name of a target model and a target sequence;
scheduling the target model from a stored model according to the target sequence in the target scheduling rule to perform information processing and obtain a request result corresponding to the request information; and
feeding the request result back to the user terminal.

2. The method according to claim 1, wherein the step of determining a target business scenario corresponding to the request information comprises: determining the target business scenario according to business interface information in the request information; wherein the business interface information is in a one-to-one correspondence with the business scenario.

3. The method according to claim 1, wherein the step of determining, according to a preset configuration rule, a target scheduling rule corresponding to the target business scenario comprises: determining the target scheduling rule corresponding to the target business scenario according to a preset correspondence between business scenario information and a scheduling rule in the preset configuration rule.

4. The method according to claim 3, wherein the scheduling rule comprises: a scheduled model's name and a scheduling sequence.

5. The method according to claim 1, wherein the stored model adopts a unified preset model interaction interface.

6. A model management method, comprising:
providing a configuration server configured to store a configuration rule and a model, wherein the configuration rule comprises: a preset correspondence between a business scenario and a scheduling rule; wherein the scheduling rule comprises: a scheduled model's name and a scheduling sequence; and
obtaining a target business scenario, and determining a target scheduling rule corresponding to the target business scenario according to the target business scenario and the stored configuration rule, and feeding back the target scheduling rule.

7. The method according to claim 6, wherein the stored model adopts a unified preset model interaction interface.

8. The method according to claim 6, further comprising: receiving a request for updating the configuration rule, and processing the stored configuration rule according to a rule update operation and rule update content in the request for updating the configuration rule; wherein the rule update operation comprises: adding a configuration rule, modifying a configuration rule, and/or delete a configuration rule.

9. The method according to claim 6, further comprising: receiving a model update request, processing the stored model according to a model update operation in the model update request, wherein the model update operation comprises: adding a model, modifying a model, and/or deleting a model.

10. A model application system, comprising:
a user terminal configured to send request information to a model application server, and receive a request result corresponding to the request information; wherein the request information comprises: business interface information and request content; and
the model application server configured to receive request information sent by the user terminal; determine a target business scenario according to the request information, determine a target scheduling rule corresponding to the target business scenario according to a preset configuration rule, schedule a target model according to a target sequence in the target scheduling rule to perform information processing and obtain a request result corresponding to the request information, and feed the request result back to the user terminal; and the model application server being further configured to store the model.

11. The system according to claim 10, wherein the model application server comprises: a configuration unit, a scheduling unit and a model and configuration storage unit; wherein
the model and configuration storage unit is configured to store a configuration rule and a model;
the configuration unit is configured to determine a target scheduling rule corresponding to the target business scenario according to the target business scenario and the configuration rule stored by the model and configuration storage unit; and
the scheduling unit is configured to schedule the target model from the model and configuration storage unit according to the target sequence in the target scheduling rule determined by the configuration unit to perform information processing and obtain a request result corresponding to the request information.

12. A model management server, comprising: a storage unit, an information receiving unit, and a scheduling rule determining unit; wherein
the storage unit is configured to store a configuration rule and a model;
the information receiving unit is configured to receive information; wherein the received information comprises: target business scenario information; and
the scheduling rule determining unit is configured to determine, according to the target business scenario received by the information receiving unit, a target scheduling rule corresponding to the target business scenario from the configuration rule stored in the storage unit.

13. The server according to claim 12, wherein the information receiving unit is further configured to receive a request for updating a configuration rule, and
the storage unit is further configured to process the stored configuration rule according to a rule update operation and rule update content in the request for updating the configuration rule; wherein the rule update operation comprises: adding a configuration rule, modifying a configuration rule, and/or deleting a configuration rule.

14. The server according to claim 12, wherein the information receiving unit is further configured to receive a model update request; the storage unit is further configured to perform information processing on the stored model according to a model update operation in the model update request, wherein the model update operation comprises: adding a model, modifying a model, and/or deleting a model.

15. A server comprising a memory and a processor, wherein the memory is configured to store a computer program which, when executed by the processor, implements the method according to any one of claims 1 to 10.
